(19)

Europäisches
Patentamt
European
Patent Office
Office européen
des brevets

(11) **EP 1 855 245 A1**

(12) **EUROPEAN PATENT APPLICATION**

(43) Date of publication:
**14.11.2007 Bulletin 2007/46**

(51) Int Cl.:
*G06Q 30/00* (2006.01)

(21) Application number: **06009791.2**

(22) Date of filing: **11.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Deutsche Telekom AG**
**53113 Bonn (DE)**
• **Technische Universität Berlin**
**10623 Berlin (DE)**

(72) Inventors:
• **Kotsovinos, Evangelos, Dr.**
**10407 Berlin (DE)**
• **Zerfos, Petros, Dr.**
**10709 Berlin (DE)**
• **Piratla, Nischal, Dr.**
**10719 Berlin (DE)**

(74) Representative: **Kampfenkel, Klaus**
**Blumbach - Zinngrebe**
**Patentanwälte**
**Alexandrastrasse 5**
**65187 Wiesbaden (DE)**

(54) **A method and a system for detecting a dishonest user in an online rating system**

(57) The present invention relates generally to a method and a system for protecting an online rating system against dishonest users and particularly to a method, a system and a computer-readable medium storing a computer program which allow to detect at least one dishonest rater participating in an online rating system.

A distributed system 10 including a master (20) and slave devices (30, 40, 50) is provided which performs a mechanism to detect dishonest raters and halt rewards accordingly as well as to explicitly reward raters who participate in a reputation management system by submitting trustworthy ratings. That mechanism works with users having submitted different numbers of ratings with respect to a plurality of entities.

Fig. 1

EP 1 855 245 A1

**Description**

Technical Field

The present invention relates generally to a method and a system for protecting an online rating system against dishonest users and particularly to a method, a system and a computer-readable medium storing a computer program which allow to detect at least one dishonest rater participating in an online rating system.

Backround of the Invention

Reputation management systems (RMSs) allow participants to report their experiences with respect to past interactions with other participants. RMSs are often provided by retailer web sites, on-line movie review databases, auction systems, and trading communities. However, information within such systems may not always be reliable- Many participants may try to obtain as much information as they can get about rated entities without submitting own ratings, as there is little incentive for them to spend time performing the rating tasks - especially if interactions are frequent and participants expect utility standards of service. Furthermore, participants tend to report mostly exceptionally good or exceptionally bad experiences as a form of reward or revenge. Additionally, ratings are often reciprocal, as underlined by the observation that a seller tends to rate a buyer after the buyer rates the seller.

In the US 6,895,385 B1 Zacharia et al. disclose a method and system for ascribing a reputation of an entity as a rater of other entities. The known mechanism of ascribing a reputation takes into account only the raters who have rated entities that the rater in question has rated. In particular, the known reputation computation of a rater of an entity uses a prediction mechanism for the ratings, which are provided by other raters to the same entity.

Summary of the Invention

It is an object of the present invention to provide a method, a system and a computer-readable medium adapted to protect an online rating system against participants who submit random or malicious ratings in particular to accumulate rewards.

It is an aspect of the invention to provide a mechanism adapted to detect dishonest raters and halt rewards accordingly as well as to explicitly reward raters who participate in a reputation management system by submitting trustworthy ratings. With such an mechanism the rating quality in an online rating system can be improved.

It is a further aspect of the present invention to provide a mechanism for detecting dishonest raters which works with users having submitted different numbers of ratings with respect to a plurality of entities.

In a preferred embodiment of the present invention an incentive model is contemplated wherein participants are explicitly rewarded for submitting ratings, and are debited when they query an online rating system, such as an RMS. Providing explicit incentives a) increases the quantity of ratings submitted and b) reduces the bias of ratings by removing implicit or hidden rewards, such as revenge or reciprocal ratings. To prevent participants from submitting arbitrary or dishonest feedback with the purpose of accumulating rewards, the invention proposes to determine a probabilistic indication value, also referred to as honesty estimator or nose length. The indication value takes into account all raters participating in an online rating system and their ratings given to different entities to be rated.

The above mentioned technical problem is solved by a method of detecting at least one dishonest rater in at least one online rating system as set forth in claim 1.

According to that method ratings are stored which have been entered by a plurality of raters with respect to at least one entity to be rated. It is to be noted that an entity may be, for example, an individual, an object like a movie or services provided by a peer to peer system, an online auction system or a public computing system. Now an individual value is calculated for a first rater of said plurality of rater and for at least one second rater of said plurality of raters in dependence of the ratings entered by said first rater and said at least one second rater with respect to said at least one entity. Furthermore, an indication value is calculated for said first rater on the basis of all calculated individual values, wherein that indication value represents the degree of honesty of said first rater. The indication value is compared to a predetermined dishonesty threshold. Then, said first rater is classified as dishonest if the indication value is equal or higher than the dishonesty threshold.

In a preferred embodiment the step of calculating an individual value for said first rater and each second rater comprises the following steps:

a) for each entity rated by at least said first rater the probability distribution is calculated for the ratings available for the respective entity, and
b) the calculated probability distributions are combined, to form the individual value with respect to said first rater. If it is assumed that the probability distributions are independent they can be easily summed in step b).

The steps of a) and b) are repeated for each second rater to obtain an individual value for each second rater.

In order to improve the method of detecting a dishonest the mean value and the standard deviation of the calculated individual values are determined. Furthermore, the indication value for said first rater is determined in dependence of the individual value of said first rater, the mean value and the standard deviation of the calculated individual values and the total number of ratings entered by said first rater. Without this adjustment, a rater's individual value is proportional to the number of her/his submissions, and in case it is larger than the average number of ratings submitted per user she/he is deemed more dishonest.

In a preferred embodiment, an individual value is calculated for each rater of said plurality of raters and an indication value is determined for each rater of said plurality of raters.

In order to keep track of the raters' behavior the individual values and the indication values of the respective raters are determined again if at least one further rating occurs. Since individual values do not change dramatically from one rating to another, the algorithm for calculating the individual values and the indication values runs periodically to reduce processing overhead, and waits for several new ratings to accumulate in the online rating system. New ratings are determined using an identification code, for example a timestamp that is associated with each rating that is received.

It is a further goal of the present invention to distribute the processing load that is involved in the calculation of the individual values and of the indication values of the raters to multiple machines and to parallelise the computationally intensive operations so that the system can be scaled with or adapted to an increasing number of raters and their ratings. As a result, the plurality of raters is divided into a plurality of groups of raters. Each group of raters is assigned to a separate machine which determines and updates the indication value of each rater associated to it.

In order to reward raters that are honest raters are associated to predetermined parameters and/or classified into at least one predetermined category depending on their indication value. Then, the online rating system queries at least one parameter, e. g. category or indication value, of a selected rater to determine whether or not to reward the selected rater for submitting a rating. For example, the raters are classified into three categories, e.g. radicals, followers and average class raters. Radicals are users who disagree with others more often than other users. Followers disagree less often with others. Average class raters maintain a healthy level amongst the raters.

To correctly assess a rater, for example as honest or dishonest, the indication value of at least said first rater is calculated and monitored in real time, wherein said first rater enters an adjustable probation period, if his indication value exceeds the dishonesty threshold and wherein the first rater leaves the probation period if the indication value falls below the dishonesty threshold and remains there for the whole probation period. A rater will be rewarded by submitting a rating only if she/he is considered as an honest rater.

The above mentioned technical problem is further solved by a system for detecting at least one dishonest rater.

The system comprises storage means for storing ratings which are entered into an online rating system by a plurality of raters with respect to at least one entity to be rated, first means for calculating an individual value ($T_u$) for a first rater of said plurality of raters and for at least one second rater of said plurality of raters in dependence of the ratings entered by the first and each second raters with respect to said at least one entity. It further includes means for determining an indication value for said first rater on the basis of all calculated individual values, means for comparing the indication value to a predetermined dishonesty threshold and means for classifying the first rater as dishonest if the indication value is equal or higher than the dishonesty threshold. It is to be noted that the online rating system may be a known reputation management system (RMS) which cooperates with the inventive detection system.

In a preferred embodiment the calculating means calculates for each entity rated by at least said first rater the probability distribution for the ratings available for the respective entity and combines the calculated probability distributions to form the individual value with respect to said first rater.

In addition, second means might be provided for calculating the mean value and the standard deviation of the calculated individual values. In this case, the determination means determines the indication value for said first rater in dependence of the individual value of said first rater, the mean value and the standard deviation of the calculated individual values and the total number of ratings entered by said first rater.

In a preferred embodiment, the system for detecting dishonest raters performs a multiprocess, multithreaded application written in Java, which interacts, for example with a MySQL backend database for storage and retrieval of system/user data. The architecture of the detection system may follow a master-slave model for server design. The goal is to distribute the processing load that is involved in the calculation of the indication value, also termed nose-lengths of the participants or raters to multiple machines, and parallelise the operation so that it scales with the number of participants and ratings. The more slave machines are added to the system, the higher the possibility of bulk processing of user honesty updates. As a result, a plurality of slave devices are connected to a master device and to at least one online rating system, wherein the master device is adapted to assign a number of raters to each slave device. Each slave device includes storage means for storing ratings which are entered into an online rating system by the raters assigned to the respective slave device,

first means for calculating an individual value ($T_u$) for at least some of the raters assigned to the respective slave device,

means for determining an indication value for at least some of the raters assigned to the respective slave device on the basis of the calculated individual values;

means for comparing the indication value to a predetermined dishonesty threshold, and

means for classifying a rater as dishonest if the indication value is equal or higher than the dishonesty threshold.

In order to optimize the computational processing time further, the master device includes said second means for calculating the mean value and the standard deviation of all individual values calculated by the slave devices.

According to a further aspect of the present invention, a computer-readable medium is provided which stores a computer program that defines instructions to control a computer or computer system to perform a method according to anyone of the claims 1 to 10.

The present invention provides explicit incentives for honest ratings. Thus, it does not pay a dishonest rater based on his reputation. In fact, it does not pay a dishonest rater at all.

Furthermore, the present invention provides an efficient algorithm and method implementing an honesty metric in an optionally distributed way.

Brief Description of the Drawings

The invention together with its objects and the advantages thereof may be best understood by references to the following description taken in conjunction with the accompanying drawings in which:

Fig. 1 is a schematic block diagram of a distributed system architecture;

Fig. 2 is a diagram showing the distribution of the nose-length values;

Fig. 3a is a diagram showing variation in distributions of ratings;

Fig. 3b is a diagram showing the correlation among ratings for three entities;

Fig. 4a is a diagram showing the time taken by the periodic nose-length calculation on a slave for different numbers of ratings and slaves;

Fig. 4b is a diagram showing the speedup observed by increasing the number of slaves; and

Fig. 5 is a diagram showing the nose-length values as a function of the time.

Detailed Description of the Invention

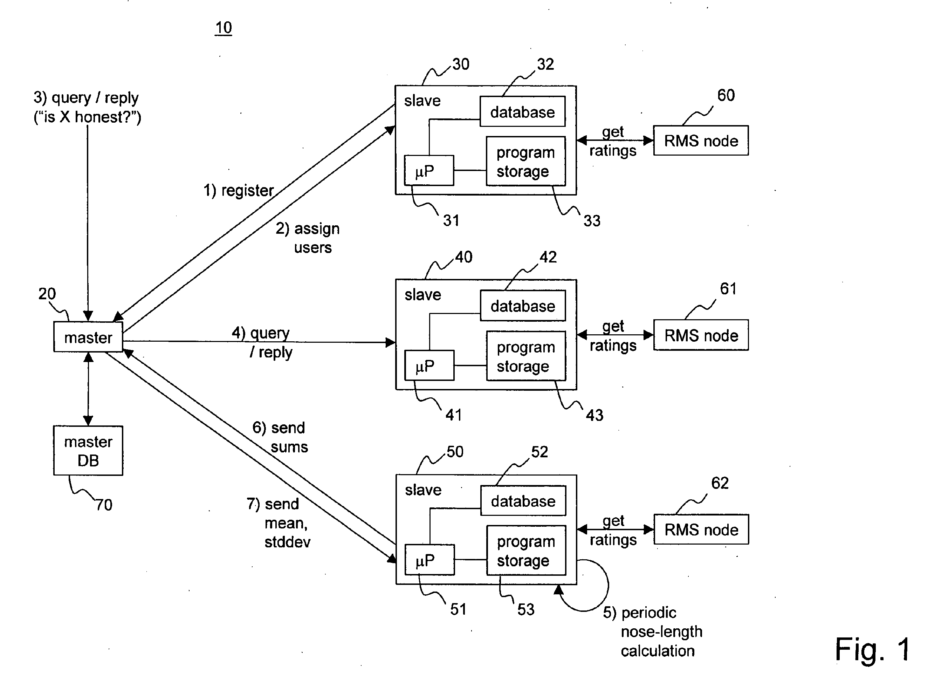

Fig. 1 depicts a reward and dishonesty detection system, generally designated with reference number 10, which is able to encourage users to submit honest ratings.

The system comprises a cluster-based and distributed architecture. A distributed system architecture is preferred in order to scale the system to a large number of participants or raters, each of which requires computationally intensive operations and increases the system load considerably. System 10 is for example based on a multiprocess, multithreaded application written in Java, which interacts with a MySQL backend database for storage and retrieval of system/user data. Fig. 1 shows the main components of the system 10, along with their interaction with an online rating system, e.g. a reputation management system RMS. The system architecture follows a master-slave model for server design. The goal is to distribute the processing load that is involved in the calculation of the nose-lengths |Z| of participants to multiple machines, and parallelise the operation so that it scales with the number of participants and ratings. The more slave machines are added to the system, the higher the possibility of bulk processing of user honesty updates.

Without limiting the applicability of the system 10 we assume the RMS to be distributed, running a node on each slave machine.

As shown in Fig. 1, a plurality of slave machines 30, 40 and 50 are connected to a master 20. The master 20 in turn is connected to a database 70 which serves to store system and rater data as explained below. In order to facilitate illustration of the system 10, only three slave machines are shown. The slave machines 30, 40 and 50 are further connected to an online rating system, which for example is a known reputation management system RMS, represented by three RMS nodes 60, 61 and 62. For example, the RMS architecture is similar to that disclosed in "BambooTrust: Practical scalable trust management for global public computing" by E. Kotsovinos et al., published in Proc. of the 21st Annual ACM Symp. On App. Comp. (SAC), Apr. 2006.

In this embodiment, each RMS node 60, 61 and 62 is associated to a separate slave machine, i. e. slave machine 30, 40 and 50, respectively. Each slave machine includes at least a database, a program storage and a central processing unit, for example a microprocessor controlled by a program stored in the program storage. In particular, the slave machine 30 comprises a microprocessor 31, a database 32 and a program storage 33, both are connected to the microprocessor 31. Slave machine 40 comprises a microprocessor 41, a database 42 and a program storage 43, both are connected to the microprocessor 41. Slave machine 50 comprises in turn a microprocessor 51, a database 52 and a program storage 53, both are connected to the microprocessor 51. As described in detail below, for example nose-length values Z and individual values $T_u$ of raters participating in the RMS are stored and updated in the respective databases. The databases 32, 42, 52 and 70 can be MySQL backend databases.

Now, the main process on the master and the slave machines is described.

Upon initialisation of the system 10, the main process on the master 10 starts a new thread that listens for incoming registration requests from the slave machines 30, 40 and/or 50, (Step 1 in Fig 1.). Once several slave machines have registered their presence with the master 20, the latter assigns to each slave machine a distinct subset of all users that participate in the rating system 60, 61, 62 which is used to populate each slave machines's local database 32, 42 and 52, respectively (operation 2). The user subsets that are assigned to the slave machines 30, 40 and 50 are for example disjoint to eliminate contention for any given user profile on the master 20, minimise the load from queries on participant information submitted by slave machines to the master, and also reduce network traffic.

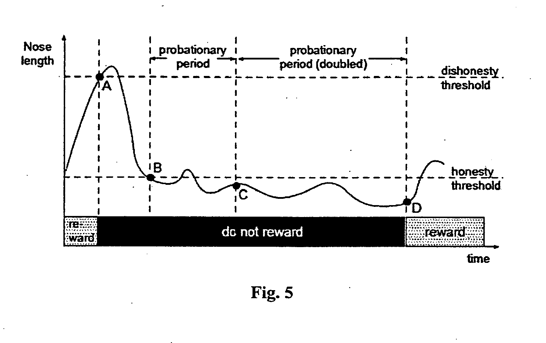

Additionally, when the master 20 receives a query from the RMS regarding the trustworthiness of a rater (operation 3), it acts as a dispatcher and forwards the request to the appropriate slave machine 30, 40 or 50 for retrieving the respective value (operation 4). Queries are encoded, for example, in XML format to allow interoperability with a variety of reputation management systems. Dispatching of queries is also handled by a separate thread, which is a kind of subroutine, to allow the main process to maintain an acceptable level of responsiveness of the system to user input. Lastly, the master 20 also provides a graphical user interface, as shown in Fig. 5, through which users of the system 10 can perform queries on the honesty of participants, and set the system parameters such as honesty and dishonesty thresholds.

The main process that runs on a slave machine initially registers itself with the master 20 (operation 1), and receives the subset of participants this slave machine will be responsible for, as well as system-wide variables (operation 2). It then listens for incoming query requests from the master 20. Queries are of several types such as requests for the credit balance of a rater, notifications of a new rating to the RMS nodes 60, 61 and 62, requests for a trust value, etc. They are, for example, parsed and processed by a plurality of threads that is started by the main slave process (operation 4).

Slave machines 30, 40 and 60 also update the nose-length values for their assigned participants, and calculate a user's position with respect to the reward model, as shown in Fig. 5. This is performed by a separate thread that runs, for example, periodically on the slave machines 30, 40 and 50 , which are connected to the respective RMS nodes 60, 61 and 62, respectively, to receive aggregate information on the ratings for use in calculations and updates of the nose-lenght values of all participants who have in the past evaluated entities or objects that received a new rating (operation 5).

The system 10 makes use of persistent storage for storing intermediate results and general statistics on the participants and the entities that are rated. The aim is to avoid costly re-calculations upon system crash, and perform only incremental updates on the individual values $T_u$ and nose-lenght values Z as new ratings are submitted to the RMS nodes 60, 61 and 62, as described below. System information such as honesty threshold, length of probationary period, mean and standard deviation of the $T_u$ values, as well as histogram statistics for the rated entities are stored in the local MySQL database 32, 42, 52 on each slave machine.

We now describe a preferred embodiment as to how the indication value, also termed honesty estimator or nose-length Z, for a respective rater can be determined by using individual values $T_u$ calculated with respect to each rater associated to the slave machines 30, 40 and 50.

A preferred aspect of the system 10 lies in an algorithm that e.g. periodically updates the individual values $T_u$ and the nose-length values |Z| of the participants of the RMS.

It is now assumed to calculate the nose-length Z for a certain rater of a plurality of N raters.

First, the probability distributions Pr(Qs) of all ratings available for all subjects or entities which have been rated at least by the certain rater, are calculated. It is assumed that a set of B entities has been rated by the certain user. The probability distribution regarding a certain entity s which has been rated by a plurality of user is estimated using the following formula for every rating p:

$$\Pr(Qs) = \frac{\# \text{ of participants who assigned rating } \rho \text{ to } s}{\# \text{ of participants who rated } s} \qquad (1)$$

wherein $Q_9$ is the rating given to the entity s.

Once all probability distributions Pr(Qs) have been calculated the individual value $T_u$, with u= 1 to N, of the user is calculated by using the following equation:

$$T_u = \sum_{s \in B} \ln(\Pr(Q_s)),$$ (2)

wherein the Log-probability of $Q_s$ is used and B is the number of entities rated by the user u.

In a similar manner, the individual values $T_u$ for all further raters of the plurality of N raters are calculated.

In a preferred embodiment, calculation of the nose-length |Z| uses the mean value $\overline{T}$,also termed $\mu$ and the standard deviation $\hat{\sigma}$ of the individual values $T_u$ of all N participants. From the formulas for the mean and standard deviation we have:

$$\overline{T} = \frac{1}{N}\sum_{u=1}^{N} T_u$$ (3)

and

$$\hat{\sigma} = \sqrt{\frac{1}{N-1}\sum_{u=1}^{N}(T_u - \overline{T})^2}$$ (4)

By substituting (3) into (4) and after simple algebraic manipulations, we get:

$$\hat{\sigma} = \sqrt{\frac{1}{N(N-1)}\left(N\sum_{u=1}^{N} T_u^2 - \left(\sum_{u=1}^{N} T_u\right)^2\right)}$$

Each slave machine 30, 40 and 50 calculates the sum and the sum-of-squares of $T_u$ values for its participant set and sent the respective values to the master 20 (operation 6 in Fig. 1). The master 20 then calculates the mean and standard deviation for all the participants, and disseminates the results back to the slaves for further use in estimating |Z| (operation 7).

The calculation of the nose-length |Z| of the a certain participant uses e. g. the mean value $\mu$ and the standard deviation $\hat{\sigma}$ for all N raters as well as the scaling of the certain rater's individual value $T_u$ according to the total number of rating submissions the participant has made. Without this adjustment, a participant's individual value $T_u$ would be proportional to the number of her submissions, and in case it is different from the average number of ratings submitted per user she is deemed more dishonest. This is also intuitive in the sense that a participant with many ratings is more likely to have made dishonest ratings, however the system 10 is interested in the rate of disagreement, not the total number of its occurrences. To account for this fact, the nose-length Z of a certain rater or participant can be determined by the equation as follows:

$$Z = \frac{\dfrac{T_u}{\#\, of\ ratings\ made\ by\ u} - \mu}{\sigma}$$ (5)

An exemplary algorithm for calculating and updating an individual value $T_u$ is given below:

**Algorithm** Update Individual Values $T_u$

**Require**: New ratings added to RMS since last update

```
1: AffectedUsers ← Find users that have rated subjects, which appear in new ratings
2: for (each user u in AffectedUsers) do
3:   UserSubjects ← Find subjects rated by user u
4:   NewUserRatings ← Find new ratings about UserSubjects
5:   for (each new user rating i in NewUserRatings) do
6:     Subject ← Subject rated by i
7:     UserRating ← Rating about Subject by user u
8:     NumberSame ←Number of ratings about Subject equal to UserRating
9:     TotalSubjectRatings ← Number of ratings that rate Subject
10:    T_u ← T_u - (log (NumberSame) - log (TotalsubjectRatings))
11:    if (UserRating = rating of rating i) then
12:      T_u ← T_u + (log (NumberSame + 1) - log(TotalSubjectRatings + 1))
13:    else
14:      T_u ← T_u + (log (NumberSame) - log (TotalSubjectRatings + 1))
15:    end if
16:  end for
17: end for
```

This algorithm is executed by each slave 30, 40 and 50 under control of the microprocessor 31, 41 and 51, respectively, by using a program stored in the storage 33, 43 and 53, respectively.

We now consider the case of updating an individual value $T_u$.

As new ratings get submitted to a an RMS node 60, 61 and/or 62 of the reputation management system, users who have reviewed subjects that are rated by the new ratings need to have their $T_u$ values updated (variable AffectedUsers of Algorithm). For each one of these users, the algorithm finds the ratings that affect her $T_u$ value and accordingly adjusts it based on whether the user rated the subject with the same rating as the one carried in the new rating (lines 11-15 of Algorithm). Since individual $T_u$ values do not change dramatically from one rating to another, the algorithm may run periodically to reduce processing overhead, and waits for several new ratings to accumulate in the RMS. New ratings are determined using for example a timestamp that is associated with each rating that is received.

Each slave machine 30, 40, 50 updates the nose-lengths Z of the users that have been assigned to it.

To better distribute the user space to the slaves 30, 40 and 50, the master 20 assigns new and existing users to the slaves according to the formula:

```
slave number = (userid % n)
```

wherein n is the number of slaves present, i. e. in our case is n=3.

Now a reward scenario is considered in conjunction with Fig. 5. In this case the RMS can use the nose-length of a certain rater to determine whether or not to reward her when submitting a new rating. If an honest rater gets rewards her credit balance will increase which allows the honest rater in the future to query system 10 in order to get for example honest or dishonest information of other raters. It is assumed that the rater in question has been initially associated to the slave machine 30.

As shown in Fig. 5, the certain rater is determined by slave 30 to be honest as long as her nose-length lies between the honesty threshold and the dishonesty threshold. The nose-length values calculated by slave machine 30 can be retrieved by RMS node 60 to decide whether or not to reward the rater. In the present scenario, the rater will be rewarded for new ratings until time A. At this point her nose-length increases such that she is now considered by the slave machine 30 as a dishonest rater. As a result the RMS node 30 will be advised not to reward ratings submitted by that rater. Once the rater's nose-length falls below the honesty threshold, at point B, the rater enters a first probationary period having an adjustable length during which she/he has to remain honest in order to receive rewards from the RMS node 60 again. In the present scenario, her nose length rises above the honesty threshold during that first probationary period. Therefore, after the end of the first probationary period, at point C, she enters a second probationary period of an adjustable length. Slave machine 30 considers the rater only honest again at point D, after demonstrating honest behavior for a time period defined by the first and second probationary periods.

Experimental results

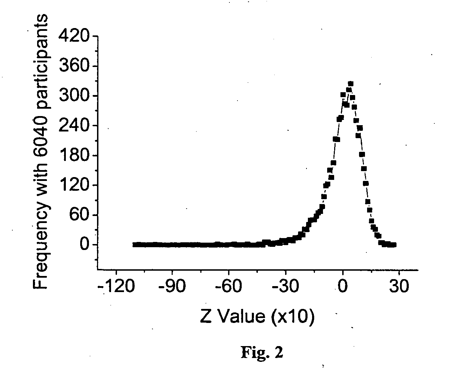

The proper function of the system 10 has been tested, the result of which are described below in conjunction with Fig. 2 to 4b.

In particular the proposed framework has been evaluated using a large sample of real-world rater ratings in order to demonstrate its effectiveness. The system's performance and scalability have been analyzed through experimental evaluation. The system 10 is shown to scale linearly with the on-demand addition of slave machines, allowing it to successfully process large problem spaces.

In this section we present a three-fold experimental evaluation of our distributed architecture.

First, we have analysed the GroupLens data-set to ensure that the assumptions made by our model about the distribution of nose-lengths and independence of ratings hold. Furthermore, we demonstrate that our algorithm can successfully detect dishonesty. Finally, we show by means of experimental evaluation that the system 10 can scale on-demand to accommodate increasing numbers of participants and subjects.

a) Analysis of the data set

*Nose-Length Distribution*. The ability to judge, given a set of participant ratings, whether a participant is likely to be honest is a crucial element of the system.

We analysed the GroupLens movie ratings data set to determine the real distribution of nose-length values inside the set, for the users it contains. The nose-length value was plotted against its frequency of occurrence. The result of this analysis is shown in Fig. 2. The nose-length distribution does indeed fit the theoretically anticipated Gaussian distribution. This provides a strong indication about a relationship between one's relative frequency of disagreement and his or her probability of being honest. Section b) demonstrates that this relationship holds, and that the system 10 is able to exploit it to detect dishonesty.

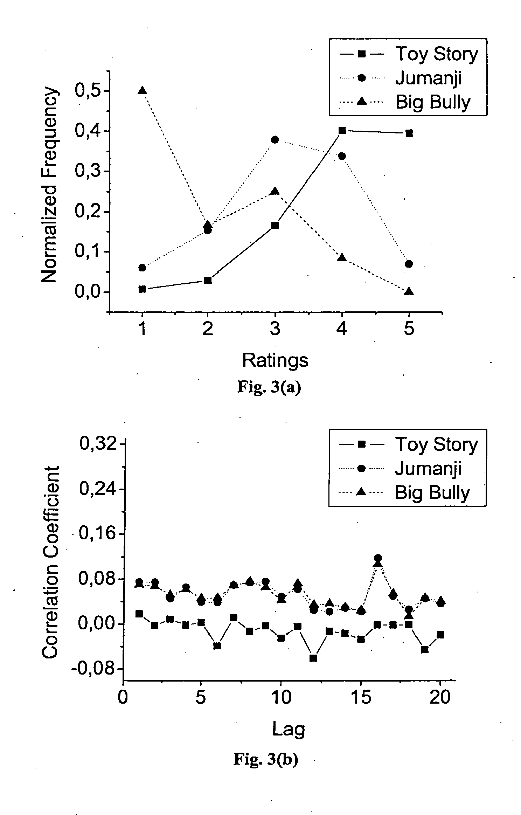

*Distribution and correlation of ratings.* Our analysis of the chosen data set revealed that ratings given by users to films did not always have a normal distribution. Fig. 3(a) shows three density plots of ratings for three different movies namely, "Toy Story", "Jumanji" and "Big Bully".

Film ratings are highly subjective. Some participants are likely to be very impressed by a film while others may consider it disappointing. This can lead to ratings exhibiting a multi-modal distribution - for example, approximately half of the participants may assign a rating of 1 or 2, and the other half a rating of 4 or 5. This type of distribution could lead to a mean value which almost no one has entered, and to a high standard deviation for ratings. Our analysis showed that this potential problem does not appear to be severe; most films did have a firm most common rating, although this value may not always be exactly reflected on the mean.

In addition to the distribution of ratings, the correlation of ratings in the GroupLens set was also studied, as illustrated in Fig. 3(b). Since the correlation coefficients are very low, it can be safely assumed that the ratings provided by a user are independent of the existing ratings, thus making the rating process independent and identically distributed. This observation emphasises that $\hat{\sigma}$ and $\mu$ of distributions are appropriate to capture and characterise user honesty.

b) Evaluation of the algorithm

To evaluate the effectiveness of the system 10, in particular the master 20 and the slave machines 30, 40 and 50, with respect to assessing the honesty of participants we conducted the following experiment. We injected the ratings of four known dishonest users into the existing GroupLens data set, fed the resulting data set into the databases of the respective slave machines, and monitored the nose-length values that the slave machines and/or the master assigned to the known dishonest users. We created the following four users and subsequently injected their rating into the data set:

**1: Table 1. $T_u$ and nose-length values (x10) of six users**

| User | $T_u$ | Z |
|---|---|---|
| Mr. Average | 8.62 | 68.42 |
| Ms. Popular | 4.06 | 66.14 |
| Mr. Disagree | -4.70 | 61.75 |
| Ms. Random | -14.02 | 57.07 |
| Mr. Average-100 | -34.95 | 62.33 |

(continued)

| User | $T_u$ | Z |
|---|---|---|
| Ms. Random-100 | -26.35 | 65.43 |

- *Mr. Average.* This user periodically queries the RMS to obtain the average rating for each movie he wishes to rate, and subsequently submits the integer rating closest in value to the average rating reported for the same movie. This average rating reported is unlikely to continually be the most popular rating because of the nature of the ratings' distributions.
- *Ms. Popular.* This user periodically queries the RMS to establish the most popular rating for each movie she wishes to rate, which she then submits for the same movie.
- Mr. Disagree. This user periodically queries the RMS to obtain the average rating for each movie he wishes to rate, and then reports a rating that is as far from the average value as possible. For instance, he would report 1 if the average rating was 5 and vice versa, and he would report 1 or 5 (at random) if the average rating was 3.
- Ms. Random. This user periodically submits a random rating for each movie she wishes to rate.

We selected a subset of 10 films from the RMS for these dishonest users to rate, entered their corresponding ratings - one per movie per user, and used he slave nmachines to assess their honesty values. The results of this experiment are shown in Table 1. The experiments titled "Mr. Average-100" and "Ms. Random-100" refer to users Mr. Average and Ms. Random respectively, having rated 100 films instead of 10.

The above shows that dishonest users do have a nose-length (Z value) quite different from that of the honest users. The distribution of Z values, as shown in Fig. 2, peaks at Z = 4.29, leaving the Z values of our dishonest users clearly off the far right side of the graph. Furthermore, interestingly, no users in the original data set disagreed to the extent of Mr. Disagree.

This result demonstrates that the honesty metric as given by equation (5) is effective, being able to spot our simulated dishonest users in a large data set of real ratings. It can also be used to choose appropriate honesty and dishonesty threshold values, which is discussed in the following section.

*Selection of threshold values as shown in Fig. 5.*

Choosing honesty and dishonesty thresholds presents a trade-off: setting the dishonesty threshold too high may allow dishonest participants to be rewarded, while setting it too low may punish honest participants who, owing to the subjective nature of the rating topic, vary in opinion a little too frequently or too infrequently. At the same time, setting the honesty threshold too low would make it difficult for a dishonest user to be deemed honest again, while setting it too high would increase fluctuation between the honest and dishonest states.

Our system allows for these parameters to be adjusted by a system administrator. Suitable honesty and dishonesty thresholds, as depicted in Fig. 5, can be devised through inspection of the nose-lengths of known dishonest users (such as the ones in the previous section), the distribution of nose-lengths, and depending on the trustworthiness of the environment in which the master-slave-system is deployed. Tuning the thresholds effectively determines the tolerance (or harshness) of system 10.

As an example, as Fig. 2 shows, 89.6 % of participants are within the Z (x10) range -14.5 to 14.5, and 93.34% are within the Z range -17 to 17. Setting the honesty threshold at 14.5 and the dishonesty threshold at 17 would deem 6.66% of participants dishonest.

*Rating engineering.*

Let us consider a participant that submits a number of honest ratings, enough to take her well above the dishonesty threshold. She then submits a mixture of dishonest and honest ratings in varying proportions, and tests whether she is still deemed honest. She keeps increasing the proportion of dishonest ratings until she is deemed dishonest, and then reverses that trend. At some point, the user may find an equilibrium where she can be partially dishonest - but not enough for the system to halt her rewards. We term this type of attack rating engineering.

The master and/or the slave machines provide a number of countermeasures against such attacks. First, it does not make the threshold values publicly accessible. At the same time, it conceals fine-grained nose-length values, providing only a binary honest/dishonest answer when queried about a certain user. Additionally, the exponentially increasing probationary period introduces a high cost for such attacks. As credits cannot be traded for money, the incentive for determined rating engineering is reasonably low.

c) Scalability

*Experimental setup.*

To assess the performance and scalability of system 10 we deployed the system on a cluster composed of five machines, as shown in Table 2. We deployed five slave instances, one on each machine. The master 20 was run on machine number one, along with one slave instance. The base value shown in the table represents the time needed by each machine (running the entire system on its own) to update the nose-length of each participant in the GroupLens data set, when 5000 new ratings have been submitted. We term new ratings the ones submitted after the latest periodic execution of the algorithm.

The performance difference between the slaves, as indicated by the disparity of base time values, is due to both hardware differences and level of load.

Table 2. Specification and base time for a master and slave machines in the distributed system 10

| Machine | Specs | Base time (s) |
|---|---|---|
| 1 | AMD Opteron 244, 1.8GHz, 2GB RAM | 765.85 |
| 2 | AMD Opteron 244, 1.8GHz, 2GB RAM | 764.90 |
| 3 | UltraSPARC-IIIi, 1.0GHz, 2GB RAM | 1904.79 |
| 4 | Intel Xeon, 3.06 GHz, 1GB RAM | 2556.06 |
| 5 | UltraSPARC-IIIi, 1.0GHz, 8GB RAM | 1793.37 |

For instance, slave number four has been relatively heavily used by third-party applications during the time the experiments were undertaken.

*Results*

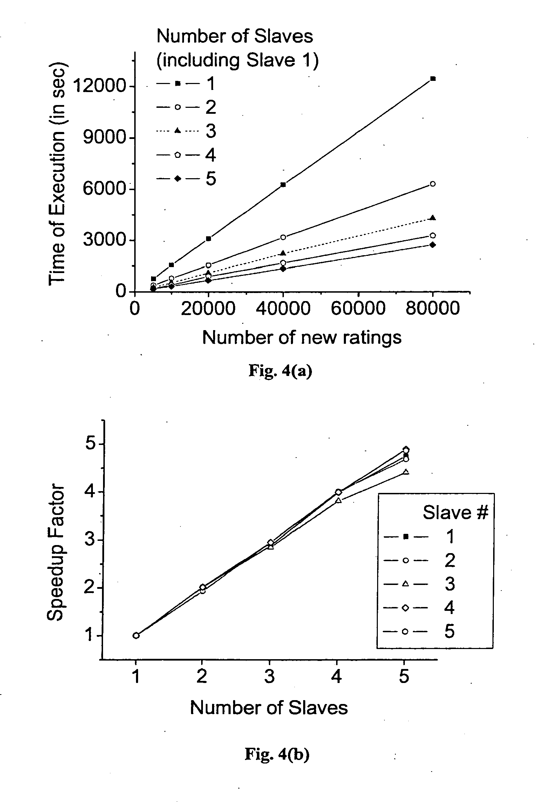

We measured the time needed by slave number one to finish the periodic calculation of nose-lengths for 5000, 10000, 20000, 40000, and 80000 new ratings, and while running in a cluster of one to five slaves. The results of this are shown in Figure 4(a). We observe that the time required increases linearly with the number of new ratings, and that adding slaves to the cluster significantly improves system performance. As an example, for 5000 ratings, slave number one completed its calculation in 161 seconds when five slaves were present, compared to 765 seconds when running on its own. For 20000 ratings the same computation took 676 seconds in a cluster of five and 3110 seconds on slave number one alone.

We also measured the speedup, denoted as the ratio of time required when a slave ran alone over the respective time when N slaves were participating in the cluster, to perform the same calculation. We measured the speedup achieved by each slave as new slaves were added to the cluster for 5000, 10000, 20000, 40000, and 80000 new ratings. The results of this experiment for 5000 ratings are shown in Figure 4(b). Speedup results for experiments with more ratings look nearly identical to these. As shown in the graph, each slave achieves a near-linear performance improvement for every new slave that is added to the cluster. This underlines that the cluster can be scaled on-demand to accommodate increasing numbers of participants and subjects. The small deviation from a precise linear performance increase is attributed to our user space partitioning scheme, assigning slightly different parts of the user space to slaves.

Also, it is worth noting that the master was not a bottleneck in the system, presenting a very low CPU and memory utilisation compared to the slaves. Additionally, our experiment demonstrates that the performance and scalability of system 10 allow it to be deployed in a realistic setting. By increasing its performance linearly when slave machines are added to the cluster, our system can scale to calculate nose-length values at a rate equal to (or higher than) the rate at which ratings are submitted. Our modest five-machine cluster - a commercial deployment would be equipped with more and more capable high-end servers - can process approximately 31 new ratings per second, in a data set of one million ratings in total.

d) Applications

Our master-slave system can improve the quality of ratings held in on-line rating schemes by a) providing incentives for a higher amount of ratings - through explicit rewards for submitting ratings, b) providing the credible threat of halting the rewards for participants who are deemed dishonest, and c) reducing the importance of the various implicit

**EP 1 855 245 A1**

goals of raters (e.g. reciprocal reward or revenge) by providing powerful explicit incentives.

Our master-slave system can be applied to any online system that involves quality assessment of entities (e.g. goods, services, other users, shops) through user-supplied ratings. This includes (but is not limited to) online communities (e.g. www.craigslist.com, Yahoo Groups and www.ratingsonline.com), online retailers and marketplaces (e.g. Amazon and Yahoo shopping), auction sites (e.g. eBay), price comparison web sites (e.g. www.bizrate.com), information portals that include user reviews (e.g. www.imdb.com), and in general any website that makes available means through which users can submit and view ratings.

The importance and relevance of improving the quality of ratings held in on-line rating schemes is evident by doing a quick on-line search; numerous on-line reports and stories are available describing problems such as unfair ratings impacting product sales, irresponsible buyers having unexpectedly high ratings, sellers offering reciprocal good ratings and threatening revenge in case of receiving bad rating, and more. Some such on-line reports are shown in Figures 6, 7 and 8.

In the following, we describe a specific embodiment as application scenario of the system. We assume an online retail website (hereto referred as "marketplace") that allows individuals to sell goods (hereto referred as "sellers"). Sellers list items (products such as used books and CDs) that wish to sell in the product listings of the marketplace. They usually provide a brief description of the product, accompanied with a digital photo and also a price at which the product is sold.

The online marketplace is essentially a website consisting of a server computing system connected to the Internet, along with a back-end database (or general storage area) for storing data. It includes software through which information that is supplied by sellers regarding products can be organized into web pages, and be made available (be served) through the Internet. The software of the marketplace also provides means through which online users can access the directory listings with the products that are being sold. Products are typically classified into a number of categories for easy identification, and also a web interface for performing searches on the products is usually provided. Additionally, an interface through which users can comment on products and transactions that they had participated in among themselves is also provided. Through that interface, numerical ratings and reviews can be submitted, stored and accessed.

There are users of the marketplace interested in buying goods listed in the website of the marketplace. Those are the "buyers". A typical first step for the purchase of a product is for buyers to log on to the website of the online marketplace. Then, either by navigating through the product categories, or as a result of a query to the search interface, buyers reach the web pages of the products and are presented with several bits of information. It can be product-specific information including any details supplied by the seller, means through which the product can be ordered, information regarding shipping, as well as references to other related products. The marketplace also makes available numerical ratings and reviews of other buyers regarding the product, as well as the person who is selling it based on her prior selling history. The ratings and reviews of other buyers are based on their experiences and level of satisfaction that they had with the product under consideration, and also the seller they had transacted with. These ratings are stored, processed, and made available by a system that operates in the marketplace and is called "reputation management system". As part of the decision making process regarding the purchase of the product, the prospective buyer consults the ratings for that product. Moreover, before engaging into a transaction with the seller of the product, the buyer seeks information on the seller, in an attempt to assess her trustworthiness as an individual to transact with.

Once the buyer decides on a product she participates into a transaction with the seller. This includes ordering the product, arranging the shipping, and also paying through some electronic payment method (e.g. credit card). Once the transaction is completed, as signified by the receipt of the product by the buyer and the conclusion of the payment process, the buyer typically logs on to the web site and submits her rating and possibly a review on the whole process, so as to inform other prospective buyers. This way a reputation is formed on the product and the seller. Note that the seller can rate (and review on) a buyer as well, also affecting the buyer reputation.

The present system operates on ratings that are stored in the RMS nodes 60, 61 62 of the reputation management system, and evaluates the quality of such information by assessing the honesty level of the person who perfomed the rating on the product or the seller.

**Claims**

1. A method of detecting at least one dishonest rater in an online rating system (60, 61, 62), said method comprising the following steps:

    storing ratings which are entered by a plurality of raters with respect to at least one entity to be rated;
    calculating an individual value ($T_u$) for a first rater of said plurality of raters and for at least one second rater of said plurality of raters in dependence of the ratings entered by said first rater and said at least one second rater

**11**

with respect to said at least one entity;
determining an indication value (Z) for said first rater on the basis of all calculated individual values, said indication value representing the degree of honesty of said first rater ;
comparing the indication value to a predetermined dishonesty threshold; and
classifying said first rater as dishonest if the indication value is equal or higher than the dishonesty threshold.

2. The method according to claim 1, wherein the step of calculating an individual value for said first rater and each second rater comprises the following steps:

   a) for each entity rated by at least said first rater calculating the probability distribution for the ratings available for the respective entity, and
   b) combining the calculated probability distributions to form the individual value with respect to said first rater;
   repeating the steps of a) and b) for each second rater to obtain an individual value for each second rater.

3. The method according to claim 2, wherein the mean value and the standard deviation of the calculated individual values are determined; and wherein the indication value for said first rater is determined in dependence of the individual value of said first rater, the mean value and the standard deviation of the calculated individual values and the total number of ratings entered by said first rater.

4. The method according to any one of the claims 1 to 3, wherein an individual value is calculated for each rater of said plurality of raters and wherein an indication value is determined for each rater of said plurality of raters.

5. The method according to any one of the claims 1 to 4, wherein the indication value of a rater is determined again if at least one further rating occurs.

6. The method according to claim 5, wherein an identification code, *e.g. timestamp,* is associated to each rating to detect the occurrence of a new rating.

7. The method according to any one of the claims 1 to 6, wherein the plurality of raters is divided into a plurality of groups of raters, each group of raters being associated to a separate machine which determines and updates the indication value of each rater associated to it.

8. The method according to any one of the claims 1 to 7, wherein each rater is classified into a predetermined category in dependence of his indication value.

9. The method according to any one of the claims 1 to 8, wherein the online rating system queries at least one parameter of a selected rater to determine whether or not to reward the selected rater for submitting a rating.

10. The method according to any one of the claims 1 to 9, wherein the indication value of at least said first rater is calculated and monitored in real time, wherein said first rater enters an adjustable probation period, if his indication value exceeds the dishonesty threshold and wherein the first rater leaves the probation period if the indication value falls below the dishonesty threshold and remains there for the whole probation period.

11. A system (10) for detecting at least one dishonest rater, comprising:

    storage means (32, 42, 52; 40) for storing ratings which are entered into an online rating system (60, 61, 62) by a plurality of raters with respect to at least one entity to be rated;
    first means (31, 41, 51) for calculating an individual value ($T_u$) for a first rater of said plurality of raters and for at least one second rater of said plurality of raters in dependence of the ratings entered by the first and each second raters with respect to said at least one entity;
    means for determining an indication value for said first rater on the basis of all calculated individual values;
    means for comparing the indication value to a predetermined dishonesty threshold; and
    means for classifying the first rater as dishonest if the indication value is equal or higher than the dishonesty threshold.

12. The system according to claim 11, wherein said calculating means (31, 41, 51) calculates for each entity rated by at least said first rater the probability distribution for the ratings available for the respective entity, and combines the calculated probability distributions to form the individual value with respect to said first rater.

13. The system according to claim 12, further comprising second means for calculating the mean value and the standard deviation of the calculated individual values; and wherein
the determination means determines the indication value for said first rater in dependence of the individual value of said first rater, the mean value and the standard deviation of the calculated individual values and the total number of ratings entered by said first rater.

14. The system according to any one of the claims 11 to 13, comprising
a plurality of slave devices (30, 40, 50) connected to a master device (20) and to at least one online rating system (60, 61, 62), wherein the master device (20) is adapted to assign a number of raters to each slave device (30, 40, 50), each slave device (30, 40, 50) including:

   storage means (32, 42, 52) for storing ratings which are entered into an online rating system (60, 61, 62) by the raters assigned to the respective slave device; first means (31, 41, 51) for calculating an individual value ($T_u$) for at least some of the raters assigned to the respective slave device;
   means for determining an indication value for at least some of the raters assigned to the respective slave device on the basis of the calculated individual values;
   means for comparing the indication value to a predetermined dishonesty threshold; and
   means for classifying a rater as dishonest if the indication value is equal or higher than the dishonesty threshold.

15. The system of claim 14, wherein the master device (20) includes said second means for calculating the mean value and the standard deviation of all individual values calculated by the slave devices.

16. A computer-readable medium having a computer program stored thereon that defines instructions to control a computer or computer system to perform a method according to any one of the claims 1 to 10.

Fig. 1

EP 1 855 245 A1

Fig. 2

Fig. 3(a)

Fig. 3(b)

Fig. 4(a)

Fig. 4(b)

Fig. 5

**EP 1 855 245 A1**

**European Patent Office**

**DECLARATION**

which under Rule 45 of the European Patent Convention EP 06 00 9791 shall be considered, for the purposes of subsequent proceedings, as the European search report

Application Number

The Search Division considers that the present application, does not comply with the provisions of the EPC to such an extent that it is not possible to carry out a meaningful search into the state of the art on the basis of all claims

Reason:

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.
The problems which are addressed do not appear to require a technical, but rather an administrative/organisational, or business, solution. The implementation of this solution may include the use of generic technical features, however these do not interact to solve any overall technical problem but merely serve their well-known functions.

The applicant's attention is drawn to the fact that a search may be carried out during examination following a declaration of no search under Rule 45 EPC, should the problems which led to the declaration being issued be overcome (see EPC Guideline C-VI, 8.5).
-----

**CLASSIFICATION OF THE APPLICATION (IPC)**

INV.
G06Q30/00

| Place of search | Date | Examiner |
|---|---|---|
| Munich | 9 October 2006 | Heselius, Per |

EPO FORM 1504 (P04C37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6895385 B1, Zacharia

**Non-patent literature cited in the description**

- **E. KOTSOVINOS et al.** BambooTrust: Practical scalable trust management for global public computing. *Proc. of the 21st Annual ACM Symp. On App. Comp. (SAC,* April 2006